(19) Europäisches Patentamt / European Patent Office / Office européen des brevets

(11) **EP 4 424 646 A1**

(12) **EUROPEAN PATENT APPLICATION**
published in accordance with Art. 153(4) EPC

(43) Date of publication:
**04.09.2024 Bulletin 2024/36**

(21) Application number: **22886208.2**

(22) Date of filing: **28.10.2022**

(51) International Patent Classification (IPC):
***C02F 1/46*** *(2023.01)*

(52) Cooperative Patent Classification (CPC):
Y02W 10/37

(86) International application number:
**PCT/ES2022/070701**

(87) International publication number:
**WO 2023/073274 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.10.2021 ES 202131026**

(71) Applicants:
• **Universitat Jaume I**
**12071 Castelló de La Plana (Castellón) (ES)**
• **Universitat Politècnica de València**
**46022 Valencia (ES)**

(72) Inventors:
• **PÉREZ HERRANZ, Valentín**
**46022 Valencia (ES)**
• **GARCÍA GABALDÓN, Montserrat**
**46022 Valencia (ES)**
• **ORTEGA NAVARRO, Emma María**
**46022 Valencia (ES)**
• **MARTÍ CALATAYUD, Manuel César**
**46022 Valencia (ES)**
• **MESTRE BELTRÁN, Sergio**
**12071 Castelló de la Plana Castellón (ES)**
• **GOSALBO NEBOT, Ana**
**12071 Castelló de la Plana Castellón (ES)**

(74) Representative: **Cueto, Sénida**
**SP3 Patents S.L.**
**Los Madroños, 23**
**28891 Velilla de San Antonio (ES)**

(54) **METHOD FOR REMOVING POLLUTANTS BY ELECTROFILTRATION**

(57) The present invention relates to a method for removing pollutants from an effluent, which comprises:
- introducing the effluent into a reactor, which comprises - a cathode facing - a conductive ceramic membrane comprising tin oxide doped with one or more metal oxides, which acts simultaneously as an anode and as a filter medium, and which separates the reactor into two compartments, a reaction chamber and a filtration chamber; and
- carrying out an electrofiltration in which at least part of the effluent to be treated is passed from the reaction chamber to the filtration chamber through the conductive ceramic membrane by means of a pressure gradient.

Figure 1

EP 4 424 646 A1

**Description**

**FIELD OF THE INVENTION**

The present invention is part of the field of electrofiltration for the elimination of emerging organic contaminants in liquid effluents.

**BACKGROUND OF THE INVENTION**

$SnO_2$ ceramic membranes doped with a suitable metal oxide to confer electrical conductivity, used as anodes in electrofiltration reactors, improve the oxidation of organic micropollutants.

The removal of emerging contaminants by Advanced Oxidation Electrochemical Processes (AEPO) has been the object of a large number of studies in recent years. AEPOs are based on the electrochemical generation of strong oxidizing agents, such as the hydroxyl radical (•OH), which are capable of mineralizing organic and organometallic compounds to convert them into $CO_2$, water, and inorganic ions. Unlike other processes that have been applied to remove organic pollutants from effluents by transferring them to another phase or stream, such as adsorption, coagulation, or membrane separation processes, AEPOs involve the use of electrons as clean reagents to achieve chemical destruction. of organic molecules. Additional advantages of AEPOs include: (i) the ease of automation of electrochemical reactors, (ii) their operation under mild pressure and temperature conditions, (iii) their wide applicability to effluents with chemical oxygen demand (COD) values. ) ranging between 0.1 and 100 g $L^{-1}$ and, (iv) a simple coupling with renewable energy sources.

The effectiveness of AEPOs depends on several factors, one of the most important being the nature of the anode. Electrodes are generally classified as "active" or "non-active" depending on their overpotential for the Oxygen Evolution Reaction (OER). Active anodes based on graphite, platinum, iridium oxides, and ruthenium oxides have a low overpotential for oxygen evolution; therefore, they are only capable of partially oxidizing organic compounds. In contrast, non-active anodes such as tin oxide doped with other oxides, lead dioxide, and boron-doped diamond (BDD) have a high overpotential for oxygen evolution, allowing the generation of hydroxyl radicals that are able to completely mineralize the organic matter and favor the complete oxidation of organic compounds to $CO_2$. Among the non-active anodes, the BDD presents the highest known potential for OER. BDD anodes produce large amounts of weakly adsorbed •OH radicals with high reactivity towards oxidation of organic compounds, resulting in superior mineralization efficiencies. However, their high cost and the difficulty of finding an appropriate substrate for the deposition of thin and stable diamond layers make it difficult to widely use BDD electrodes in large-scale applications.

Among the alternatives to BDD, tin oxide anodes doped with antimony oxide (hereinafter (Sb)SnOz) are another type of non-active electrodes that are effective in the electro-oxidation of organic compounds present in wastewater. However, the short lifetime of (Sb)SnOz when applied as a thin layer on a support also limits its large-scale application. This drawback can be easily avoided by using (Sb)SnOz in the form of massive ceramic electrodes, since the raw materials are affordable and their production is relatively simple [1,2]. In addition, (Sb)SnOz monoliths exhibit high chemical stability and high active areas if its microstructure is adequately controlled during its preparation. $SnO_2$-based microporous ceramic electrodes have recently been applied in the removal of organic pollutants using electrochemical reactors fitted with conventional parallel flat-plate electrodes in single-compartment and divided cell configurations [1-6]. Unfortunately, with this electrode configuration, a large part of the active area remains unproductive since it is the free surface that participates mainly in the electrochemical processes. To take advantage of the high active surface area of microporous electrodes, electrolyte can be forced to flow through the microporous structure in a process called electrofiltration (EF). In this way, the material fulfills a double function, simultaneously acting as a microfiltration membrane and as an anode for electro-oxidation, which is why it will be called a conductive ceramic membrane. It is to be understood in the context of the present invention that the term "conductive" means electrically conductive, as is evident, otherwise it could not function as an anode.

Until now, EF has been mainly applied in pressure gradient driven membrane processes to improve the separation efficiency of specific compounds and minimize membrane fouling.

Depending on the type of application, both non-conductive and electrically conductive membranes can be used. In the case of non-conductive membranes, a flat membrane is placed as a separator between the two electrode compartments. Under the proper setup of an electric field, unwanted charged species are subjected to additional migration force to the pressure gradient and can either be attracted to the electrodes or kept away from the membrane surface. This is possible because, apart from ions, almost all colloids and suspended solids, including microorganisms, have a negative or positive electrical charge, which interacts with the electrical field generated by the electrodes. In this case, fouling is reduced by electrophoresis and electroosmosis, while the main electrochemical reaction is the electrolysis of water to produce oxygen at the anode and hydrogen at the cathode.

In conventional electrofiltration processes, two electrodes are used, between which a conventional filtration membrane is placed, and the application of electric current is intended to reduce fouling (dirty), but the degradation of organic compounds is not achieved.

In the case of electrically conductive membranes, the membrane also acts as one of the electrodes, either as a cathode, where $H_2$ bubbles are generated which are used as a physical cleaning medium, or as anode to mitigate fouling through inactivation of microorganisms or degradation by electro-oxidation of organic matter [7]. As an example of the latter application, carbon nanotube membranes have been used for the inactivation of viruses and bacteria and the degradation of some organic compounds, although no information is provided on the degree of mineralization of organic matter, apart from the reduced electrochemical stability of carbon.

Regarding the availability of electrically conductive ceramic materials, the best known are substoichiometric titanium oxides (Ebonex®) that have been used as electrodes in different applications. The electrical conductivity of this material is due to its stoichiometry ($Ti4O_7$), but when it is used as anode in advanced oxidation processes it tends to oxidize and when it reaches its maximum oxidation state ($TiO_2$) it loses electrical conductivity.

TiOz based ceramic membranes represent an alternative to carbon-based materials in EF processes. Xu et al [8] prepared porous tubular electrodes made of $TiO_2/SnO_2Sb$ nanotubes and investigated their performance during pyrimidine degradation, reaching a maximum pyrimidine removal efficiency of 98%. Li et al. [9] applied a TiOz -based ceramic membrane coated with a catalytic layer of (Sb)SnOz to the degradation of methyl orange as a model organic pollutant, achieving removal rates of up to 71%. Most of these studies have in common that TiOz is used as a ceramic substrate on which electrocatalytic materials are deposited. Typically, this approach involves sophisticated deposition procedures, while the coating of thin and durable layers of SnOz on a porous support remains a pending challenge.

In the present invention, problems of the state of the art are solved, such as the elimination of recalcitrant and/or refractory pollutants, achieving their complete mineralization through a process that uses cheaper materials than BDD and also more effective than titanium-based electrodes.

Previous works demonstrated the effectiveness of ceramic electrodes based on doped tin oxide in the degradation and mineralization of norfloxacin (NOR) in conventional electrooxidation processes [3,4,10]. However, it has not been carried out up to now an electrofiltration process for the removal of recalcitrant organic compounds using a conductive $(Sb)SnO_2$ ceramic membrane. As an illustrative example of the present invention, a microporous $(Sb)SnO_2$ conductive ceramic membrane has been manufactured by the traditional ceramic process and applied to NOR removal through an electrofiltration process. The results obtained according to the invention allow a high destruction rate of organic pollutants compared to a conventional AEPO method without filtration, using $SnO_2$-doped ceramic anodes or BDD anodes.

Electrically conductive microporous ceramic membranes have several outstanding characteristics, high conductivity, high chemical and thermal stability, high electrochemical stability, a 3D porous structure defined by its synthesis process that allows controlling fluid permeability and its active area, which makes them particularly suitable for use in EF processes as filter media and electrodes simultaneously.

References

[1] J. Mora-Gomez, E. Ortega, S. Mestre, V. Pérez-Herranz, M. García-Gabaldón, Electrochemical degradation of norfloxacin using BDD and new Sb-doped SnO2 ceramic anodes in an electrochemical reactor in the presence and absence of a cation-exchange membrane, Sep. Purif. TechnoL 208 (2019) 68-75. doi: 10.1016/j.seppur.2O18.05.017.

[2] J. Mora-Gómez, M. García-Gabaldón, E. Ortega, M.-J. Sánchez-Rivera, S. Mestre, V. Pérez-Herranz, Evaluation of new ceramic electrodes based on Sb-doped SnO2 for the removal of emerging compounds present in wastewater, Ceram. Int. 44 (2018) 2216-2222. doi: 10.1016/J. GERAMI NT.2017.10.178.

[3] J. Carrillo-Abad, J. Mora-Gómez, M. García-Gabaldón, E. Ortega, S. Mestre, V. Pérez-Herranz, Effect of the CuO addition on a Sb-doped SnO2 ceramic electrode applied to the removal of Norfloxacin in chloride media by electro-oxidation, Chemosphere. 249 (2020). doi:10.1016/j.chemosphere.2020.126178.

[4] J. Carrillo-Abad, J. Mora-Gómez, M. García-Gabaldón, S. Mestre, V. Pérez-Herranz, Comparison between an electrochemical reactor with and without membrane for the nor oxidation using novel ceramic electrodes, J. Environ. Manage. 268 (2020). doi: 10.1016/j.jenvman.2020.110710.

[5] T. Droguett, J. Mora-Gómez, M. García-Gabaldón, E. Ortega, S. Mestre, G. Cifuentes, V. Pérez-Herranz, Electrochemical Degradation of Reactive Black 5 using two-different reactor configuration, Sci. Rep 10 (2020) 1-11. doi:

10.1038/s41598-020-61501-5.

[6] J. Mora-Gómez, M. García-Gabaldón, J. Carrillo-Abad, M.T. Montañés, S. Mestre, V. Pérez-Herranz, Influence of the reactor configuration and the supporting electrolyte concentration on the electrochemical oxidation of Atenolol using BDD and SnO2ceramic electrodes, Sep. Purif. TechnoL 241 (2020). doi:10.1016/j.seppur.2020.116684.

[7] B. Yang, P. Geng, G. Chen, One-dimensional structured IrO2 nanorods modified membrane for electrochemical anti-fouling in filtration of oily wastewater, Sep. Purif. Technol 156 (2015) 931-941. doi:10.1016/J.SEPPUR.2015.10.040.

[8] A. Xu, X. Dai, K. Wei, W. Han, J. Li, X. Sun, J. Shen, L. Wang, Preparation and characterization of a TiO2-NT/SnO2-Sb tubular porous electrode with long service lifetime for wastewater treatment process, RSC Adv. 7 (2017) 37806-37814. doi: 10.1039/C7RA05127A.

[9] X. Li, G. Liu, M. Shi, J. Li, J. Li, C. Guo, J.K. Lee, J. Zheng, Using TiO2 Mesoflower Interlayer in Tubular Porous Titanium Membranes for Enhanced Electrocatalytic Filtration, Electrochim. Act. 218 (2016) 318-324. doi:10.1016/J.ELECTACTA.2016.08.098.

[10] J. Mora-Gomez, E. Ortega, S. Mestre, V. Pérez-Herranz, M. García-Gabaldón, Separation and Purification Technology Electrochemical degradation of norfloxacin using BDD and new Sb-doped SnO2 ceramic anodes in an electrochemical reactor in the presence and absence of a cation-exchange membrane, 208 (2019) 68-75.

[11] J. Wu, F. Chen, Q. Shen, J.M. Schoenung, L. Zhang, Spark plasma sintering and densification mechanisms of antimony-doped tin oxide nanoceramics, J. Nanomater. 2013 (2013). doi: 10.1155/2013/561895.

[12] J. Zhang, L. Gao, M. Chen, Spark plasma sintering of high-density antimony-doped tin oxide ceramics from nanoparticles, J. Am. Ceram. Soc. 89 (2006) 3874-3876. doi:10.1111/j.1551-2916.2006.01317.x.

[13] M.-J. Sánchez-Rivera, A. Gozalbo, V. Pérez-Herranz, S. Mestre, Effect of pore generator on microstructure and resistivity of SbzOa and CuO doped SnO2electrodes, J. Porous Mater. 27 (2020). doi: 10.1007/s 10934-020-00959-0.

[14] X. Chen, F. Gao, G. Chen, Comparison of Ti/BDD and Ti/SnO2-SbzOs electrodes for pollutant oxidation, J. Appl. Electrochem. 35 (2005) 185-191. doi: 10.1007/s 10800-004-6068-0.

[15] J. Mora-Gómez, M. García-Gabaldón, E. Ortega, M.-J. Sánchez-Rivera, S. Mestre, V. Pérez-Herranz, Evaluation of new ceramic electrodes based on Sb-doped SnO2 for the removal of emerging compounds present in wastewater, Ceram. Int 44 (2018) 2216-2222. doi: 10.1016/j.ceramint.2017.10.178.

## DESCRIPTION OF THE INVENTION

The expression "emerging pollutants" or "pollutants of emerging concern" refers to a diffuse group of pollutants, especially of organic origin (there may be inorganic origin) previously unknown or unrecognized as such, whose presence in the environment is not necessarily new. Many of these pollutants are recalcitrant or refractory organic compounds, that is, compounds that last because they have a very chemically stable structure and are therefore resistant to attack by microorganisms or any degradation mechanism, be it biological or chemical, and that resist high temperatures without decomposing.

"Refractory" means that they are highly resistant to temperature, while "recalcitrant" has a more general meaning.

Among the emerging pollutants are substances used as medicines, fire retardants, cosmetics, insecticides, pesticides, fertilizers, etc. In addition, this type of pollutant cannot be eliminated in conventional urban wastewater treatment plants (WWTP).

In the present specification "conductive ceramic membrane" and "ceramic electrode" are expressions with the same meaning.

The present invention refers to a process for removing contaminants from a liquid effluent, comprising:

- introducing the liquid effluent to be treated in an electrochemical reactor, comprising

- a cathode facing
- a conductive ceramic membrane comprising tin oxide doped with one or more metal oxides (such as the oxides of Sb, Mo, V, Al, Ta, Nb, Ge, Cr, Bi, Ga, Li, Ce, La, Cu and Y, or mixtures of them), which acts simultaneously as an anode and as a filter medium, and which separates the reactor into two compartments, which are a reaction chamber and a filtration chamber, and

- carrying out an electrofiltration in which at least part of the liquid effluent to be treated is passed from the reaction chamber to the filtration chamber through the conductive ceramic membrane.

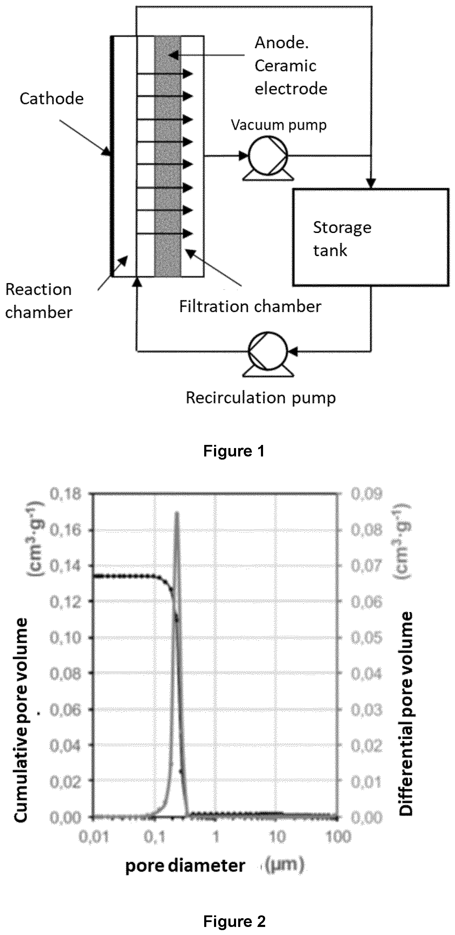

The liquid effluent to be treated can be fed to the reaction chamber by means of a liquid impulsion device, such as a pump. Said feeding can be continuous or recirculating through a storage tank as in Figure 1.

The cathode can be made with different standardized materials for this application (the most suitable for each problem) such as stainless steel, platinum, etc.

The method further comprises connecting the two electrodes to a power source through which electric current is applied.

The conductive ceramic membrane that acts as anode is a massive electrode (and therefore is not hollow), three-dimensional, and has a microporous structure that provides a large reaction surface compared to conventional electrodes. The specific surface is related to the porosity and the pore size, and it is important that it be very large. For this, the conductive ceramic membrane must have a certain pore size and porosity. The specific surface may be comprised, for example, between 1.5 and 3 $m^2g-1$. More preferably, it will be, for example, as close as 3 $m^2g-1$.

The conductive ceramic membrane comprises tin oxide, which may be doped with one or more metal oxides, such as Sb, Mo, V, Al, Ta, Nb, Ge, Cr, Bi, Ga, Li, Ce, La, Cu. and Y, and particularly preferably the doping agent is antimony oxide.

The metal oxide or oxides are present in the conductive ceramic membrane in variable percentages depending on the metal chosen, such as less than 10 mol%, but preferably in proportions of less than 5 mol%. The metal oxides with which the conductive ceramic $SnO^2$ membrane is doped improve its catalytic activity.

A preferred embodiment refers to a conductive ceramic membrane consisting of tin oxide doped with one or more metal oxides, such as Sb, Mo, V, Al, Ta, Nb, Ge, Cr, Bi, Ga, Li, Ce, La, Cu and Y, and particularly preferably the doping agent is antimony oxide.

The porosity of the conductive ceramic membrane can be adapted to the type of effluent and can be any. It can be comprised, by way of example, between 30% and 70% by volume, with respect to its total volume.

The pore size distribution of the conductive ceramic membrane should be narrow. By way of example, the value of $d_{16}$ (pore diameter above which 16% of the pore size distribution is found) must not exceed the value of $d_{84}$ (pore diameter above which 84% of the pore size distribution is found) by more than 50%.

The average pore size can be variable, and depends on various parameters, such as the material used to synthesize the membrane or the type of effluent to be treated, among others. By way of example, the average pore size may be less than 10 $\mu$m, although depending on the operating conditions sought (to favor fluid flow or to favor the removal of pollutants), this parameter must be adjusted during the preparation of the membrane. Specifically, if the objective is to maximize the removal of pollutants, and therefore it is necessary to increase the membrane-fluid interface area as much as possible, membranes with a mean pore diameter of less than 1$\mu$m will be preferable.

As particular embodiments, the average pore size is therefore preferably below 1$\mu$m, for example between 0.1 and 0.6$\mu$m.

The pollutants to be eliminated can be organic substances of all kinds (there could also be inorganic ones), but preferably emerging pollutants, and more preferably refractory or recalcitrant organic compounds.

The process comprises passing at least part of the liquid effluent to be treated from the reaction chamber to the filtration chamber. In order to force the effluent to pass through the conductive ceramic membrane, a pressure gradient is induced between both chambers by properly arranging one or more fluid impulsion equipment, such as pumps.

According to particular embodiments, the method comprises transferring the liquid effluent that has passed through the conductive ceramic membrane, and which is in the filtration chamber, to a storage tank by means of fluid impulsion equipment, such as a pump.

According to particular embodiments, the method comprises recirculating liquid effluent from a storage tank to the reactor, without said material passing through the membrane. This recirculation can be done using one or more fluid impulsion equipment, such as pumps.

According to particular embodiments, in the electrofiltration process of the invention, the liquid effluent to be treated is fed to the reaction chamber while maintaining a pressure gradient between said chamber and the filtration chamber, so that a part of the effluent passes through the membrane by filtration. In a conventional electro-oxidation process, there is no pressure gradient between the reaction chamber and the filtration chamber, so that the liquid effluent to be treated only flows through the reaction chamber, and does not cross the membrane. Using the electrofiltration configuration, the degradation and mineralization of organic compounds is much higher than that obtained with the electrooxidation configuration.

The present invention also refers to an installation to carry out the electrofiltration process defined above, which comprises a reactor in which there are arranged:

- a cathode facing

- a conductive ceramic membrane comprising tin oxide doped with one or more metal oxides, which acts as anode and as a filtration membrane, and which separates the reactor into two compartments: a reaction chamber and a filtration chamber, to carry out an electrofiltration, in which a liquid effluent comprising pollutants is passed through the conductive ceramic membrane.

The conductive ceramic membrane is microporous and has a double function, as an anode and a filtration membrane, while any material (the most suitable for each problem) can be used as a cathode, such as stainless steel.

The two electrodes are connected to a power source through which electrical current is applied.

The facility also includes fluid impulsion equipment such as pumps, necessary to feed the effluent to be treated into the reaction chamber and generate a pressure gradient between said chamber and the filtration chamber to force the passage of part of the effluent to be treated from the reaction chamber to the filtration chamber through the conductive ceramic membrane.

According to particular embodiments, the installation also comprises fluid impulsion equipment, such as a centrifugal pump to feed the liquid effluent to be treated into the reaction chamber.

The installation can also comprise a pump that operates under vacuum to force the passage of part, or all, of the liquid effluent to be treated from the reaction chamber to the filtration chamber through the conductive ceramic membrane.

Application areas.

The process of the invention can be applied in:

- Wastewater Treatment Plants (WWTP) as a tertiary treatment to eliminate refractory organic compounds and emerging pollutants such as medicines, fire retardants, cosmetics, insecticides, pesticides, fertilizers, etc. These compounds are normally found in small concentrations and are not removed by conventional processes.

- Hospitals for the treatment of their wastewater prior to discharge. In these centers, due to their characteristics, their wastewater has a high drug concentration because a large part of the drugs that are supplied to the patients are not assimilated by the body and are normally expelled through the urine. In these centers the concentration of drugs that can be considered emerging pollutants is higher than what can be found in WWTPs where these contaminants are diluted by being mixed with water from other sites.

- In the companies where the previously mentioned compounds are manufactured. These companies generate waste in which the concentration of the different compounds is much higher than what can be found in other wastewater.

- In any company that generates wastewater with a high organic load, since electrochemical processes can be adapted to treat wastewater with different COD contents.

The electrofiltration process according to the present invention is applicable to the degradation of refractory organic compounds and emerging pollutants, and the advantages it presents over other processes are due to both the membrane material used and the electrofiltration process.

Advantages over existing processes.

The Advanced Oxidation Electrochemical Processes applied to the elimination of emerging pollutants and refractory organic compounds are based on the generation of hydroxyl radicals, with high oxidizing power and great reactivity, which are capable of completely oxidizing organic matter to $CO_2$, unlike other processes, such as adsorption, coagulation, membrane separation processes, which only involve concentrating the pollutant in another phase, and not mineralizing it.

Advantages of the conductive ceramic membrane material.

SnOz-based electrodes doped with other metal oxides are less efficient than BDD, but they are also cheaper. Normally these electrodes are made by depositing metal oxides on a base that is usually titanium.

These materials have been applied to the removal of organic compounds, but their disadvantage is that they have a very short useful life due to the loss of the active coating with prolonged use.

The advantage of using electrically conductive ceramic membranes based on tin oxides as electrodes with respect to the previous ones is that, since they are manufactured using ceramic processes at high temperatures, the thermal and chemical stability is much higher than that of coatings since there is no a substrate-coating interface that weakens the whole, set and, therefore, its useful life is much higher. In addition, the manufacturing conditions guarantee that all the metal is in its maximum oxidation state, avoiding the characteristic problems of electrodes such as substoichiometric titanium oxide, which have a clear tendency to oxidation. On the other hand, these membranes, in addition to their filtering capacity, behave like three-dimensional anodes with greater volume than a conventional flat electrode and have a microporous structure that provides them with a large reaction surface. This aspect is very important in electrochemical processes wherein the reactions take place on the surface of the electrodes.

Advantages of the Electrofiltration process: The advantages of the Electrofiltration process arise from the nature of the conductive ceramic membrane, since as it is a microporous material that conducts electricity, it can be used both as a filter medium and as an electrode. In addition, with respect to a flat electrode, the reaction surface is much greater.

The electrofiltration process with ceramic membranes based on $SnO_2$, combines the advantages of ceramic filtration membranes, such as their thermal and chemical stability and the control of the microstructure during their manufacture, along with the properties of $SnO_2$, doped by its ability to generate hydroxyl radicals that can completely destroy organic matter.

**Brief description of the figures**

    **Figure 1:** Diagram of a particular embodiment of electrofiltration reactor.

    **Figure 2:** Example of pore size distribution of the conductive ceramic membrane.

    **Figure 3:** Image of a polished section of the conductive ceramic membrane (60,000X).

    **Figure 4:** shows the effect of the filtration rate on the evolution of the relative NOR concentration for the different electrode materials and reactor configurations. Comparison with the BDD electrode. The current intensity is: i = 35 mA cm$^{-2}$, the flow is: Qv = 60 L h$^{-1}$. The lines represent the fit of the experimental results to different kinetics.

    **Figure 5:** shows the effect of the filtration rate on the evolution of the relative TOC concentration for the different electrode materials and reactor configurations. Comparison with the BDD electrode. BDD. i = 35 mA cm$^{-2}$, Qv = 60 L h$^{-1}$.

    **Figure 6.** Effect of the filtration rate on the evolution of the degree of electrochemical mineralization. The results are compared with those obtained in the absence of filtration ($Q_F$ = 0 mL min$^{-1}$) and with those obtained with the BDD electrode. The current intensity is: i = 35 mA cm$^{-2}$, the flow is: Qv = 60 L h$^{-1}$.

The advantages of the conductive ceramic membrane of the present invention increase as the filtration flow rate increases, when compared to BDD for example.

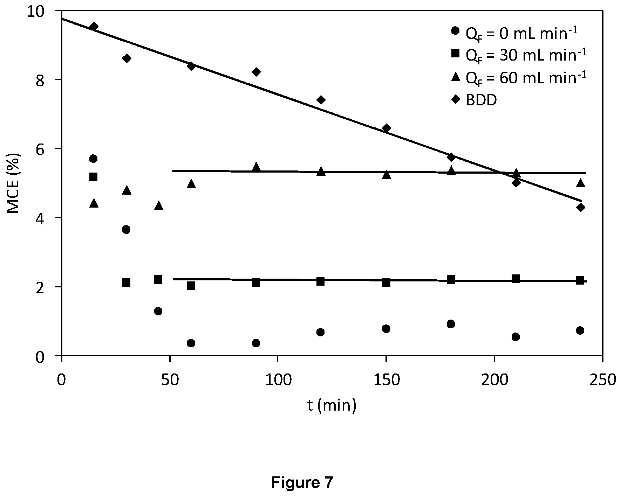

**Figure 7:** Effect of the filtration rate on the evolution of the MCE. The results are compared with those obtained in the absence of filtration ($Q_F$ = 0 mL min$^{-1}$) and with those obtained with the BDD electrode. The current intensity is: i = 35 mA cm$^{-2}$, the flow is: Qv = 60 L h$^{-1}$.

**Examples**

**Preparation of electrically conductive ceramic membranes**

The membranes were manufactured with $SnO_2$ and $SnO_3$ as dopant (99.85% purity, Quimialmel S.A., Spain and 99% purity, Alfa-Aesar, Germany respectively), in a 99/1 molar ratio. The binder was polyvinyl alcohol (PVA, Mowiol 8-88, Clariant Ibérica S.A. Spain), which was added at 0.8% by weight with respect to oxides.

A planetary mill (Pulverisette 5, Fritsch GmbH, Germany) was used to mix the raw materials, using zirconia jars and water as the fluid. Mixing conditions were 230 rpm for 1 hour. To reduce the potential degradation of the PVA, the suspension obtained was dried in an oven at a moderate temperature (80 °C) for 24 h. The dry powder was sieved through a 600 $\mu$m mesh and moistened at 4.7% (kg water/kg dry solid). Prismatic pieces of 100x100x4.5 mm were obtained by dry pressing in an automatic SSEA laboratory press (Nannetti Sri, Italy), working at 250 kg cm$^2$. Finally, the samples were synthesized in a laboratory furnace (RHF1600, Carbolite Furnaces, United Kingdom). The temperature profile was heating at 5 °C min$^{-1}$ from room temperature to 1200 °C, one hour of permanence at maximum temperature and natural cooling (electricity supply to the resistances is cut off and the oven cools itself).

**Characterization of the synthesized conductive ceramic membranes**

The bulk density of the synthesized samples was measured by immersion in mercury (Archimedes method). The electrical resistivity of the synthesized samples was measured by a four-point method with a HIOKI RM3545 equipment (Hioki E.E. Corporation, Japan), with a self-made sample holder. The collected data allowed the calculation of weight loss, relative density and linear shrinkage after thermal cycling.

The pore size distribution of the synthesized samples was obtained by mercury intrusion (AutoPore IV 9500, Micromeritics, USA) and the specific surface values were determined according to the BET (Brunauer-Emmet-Teller) method using nitrogen gas as adsorbate (Tristar 3000, Micromeritics, USA) and a degassing temperature of 150 °C for 3 h. SEM images were taken with a FEG-SEM (QUANTA 200F, FEI Co, USA) of polished sections of sintered specimens.

**Reagents and solutions**

EF experiments were carried out using NOR as a model contaminant. NOR active compound was purchased from Sigma-Aldrich and used for the standard solutions of the UV-VIS calibration curve. Analytical grade $Na_2SO_4$ (Panreac) was used as support electrolyte. All solutions were prepared with distilled water.

The working solutions were obtained from commercial NOR pellets diluted in distilled water and subsequently filtered through a 2.7 $\mu$m filter paper. The support electrolyte concentration was 0.1 M. The initial pH of the working solution was around 5.

**Electrofiltration experiments**

The experiments were carried out in a filter-press type electrochemical reactor shown schematically in Figure 1. The EF reactor has a plug flow configuration and is composed of two compartments separated by a flat conductive ceramic membrane with a geometric surface area of 58 cm$^2$. This membrane has a double function, as anode and as a filter medium. The cathode was a 10x10 cm stainless steel flat square electrode with the same geometric area as the anode. The cathode was placed in front of the anode with a gap of 0.5 cm in the so-called reaction chamber. The electrodes were connected to a regulated DC power supply. The feed solution (1 L) containing 100 mg L$^{-1}$ of NOR and the support electrolyte was stored in an external tank and recirculated through the reaction chamber by a centrifugal pump (Iwaki). A peristaltic pump (Ismatec Reglo) operating under vacuum was used to create a pressure gradient across the membrane and thus permeate part of the liquid from the reaction chamber to the filtration chamber.

During the EF experiments, the centrifugal pump and the peristaltic pump ran simultaneously. The solution was pumped from the storage tank and flowed through the reaction chamber, while a part of the solution permeated through the conductive ceramic membrane, functioning as anode, by vacuum filtration. EF experiments were compared to electrooxidation experiments using a conventional flow electrochemical reactor without filtration. To operate in such conditions, the peristaltic pump was turned off while the centrifugal pump was running. In the test without filtration, the ceramic electrode behaved like a conventional flat electrode. With this configuration, an Nb/BDD electrode with a boron content of 2500 p$\mu$m (from NEOCOAT SA®, Switzerland) was also used as anode, serving as a reference for comparison purposes. The results obtained with the two electrodes (ceramic and BDD) and with the configurations of the two reactors (with and without filtration) were compared.

EF experiments were performed in galvanostatic mode at an applied current density of 35 mA cm$^{-2}$. The recirculation flow through the reaction chamber (Qv) was established at a constant value of 60 L h$^{-1}$ by means of the centrifugal pump, while the filtration flow rate ($Q_F$) was ensured by the peristaltic pump and tested at three different levels: 0 (absence of filtration) , 30 and 60 mi- min$^{-1}$. Operating parameters, such as cell voltage, current, and pH, were recorded during the experiment, and samples were taken from the storage tank every 30 min. All experiments were carried out at room temperature for 4h. The electrochemical degradation of NOR was monitored by a Unicam UV4-200 UV-vis spectrophotometer and the residual concentration of NOR was determined by measuring the absorbance at a wavelength of 275 nm. In addition, NOR mineralization was followed by measurement of total organic carbon (TOC) and inorganic ions ($NH^{4+}$. $NO_3^-$, F$^-$, and short-chain carboxylic acids) using a Shimadzu TNM-L ROHS TOC analyzer and ion chromatograph. Metrohm 883 Basic IC Plus, respectively.

To compare the performance of EF with that of conventional flow electrolysis, the following electrochemical parameters were calculated:

- the degree of electrochemical mineralization ($\phi_{NOR}$),

- the mineralization current efficiency (MCE) and

- the specific energy consumption ($E_s$).

$\Phi$NOR, represents the fraction of NOR that is completely mineralized and was calculated as:

$$\phi_{NOR} = (\% \, TOC_{removed}) \, / \, (\% \, NOR_{removed}) \qquad (1)$$

A value of 0 in this parameter indicates a process without mineralization, while a value of 1 represents complete mineralization of the organic micropollutant.

Mineralization Current Efficiency (MCE) is the ratio between the fraction of the applied current that is effectively used in NOR mineralization and the total applied current. It is calculated according to equation (2):

$$MCE = \frac{n \, F \, V (TOC_0 - TOC_t)}{7.2 \times 10^{-5} m \, I \, t} \qquad (2)$$

Wherein $n$ is the number of electrons transferred in the mineralization process, F is the Faraday Constant, $V$ is the volume of the reactor (in L), $I$ is the applied current $(A)$, $TOC_0$ and $TOC_t$, (mg L$^{-1}$) are the TOC concentration at the beginning of the process and at a given time t, respectively, $m$ is the number of carbon atoms in a NOR molecule (16 C atoms) and $7.2 \times 10^{-5}$ is the conversion factor for dimensional homogenization (60 s min$^{-1} \times$12000 mg mol$^{-1}$).

The obtained microporous ceramic electrodes had a bluish-gray color typical of (Sb)SnO$_2$ solid solution. Its porosity was estimated to be around 45.6%, taking into account the real density of SnO$_2$, and the apparent density of the electrodes (6850 kg. m$^{-3}$ and 3727 kg. m$^{-3}$, respectively, which is consistent with the low linear shrinkage during sintering (0.27%). The pore size distribution was very narrow, with a mean pore diameter below 1 micrometer (Figure 2 and Table 1).

| Total pore volume (cm$^3$ g$^{-1}$) | D16 $\mu$m | D50 $\mu$m | D84 $\mu$m |
|---|---|---|---|
| 0,134 | 0,29 | 0,26 | 0,23 |

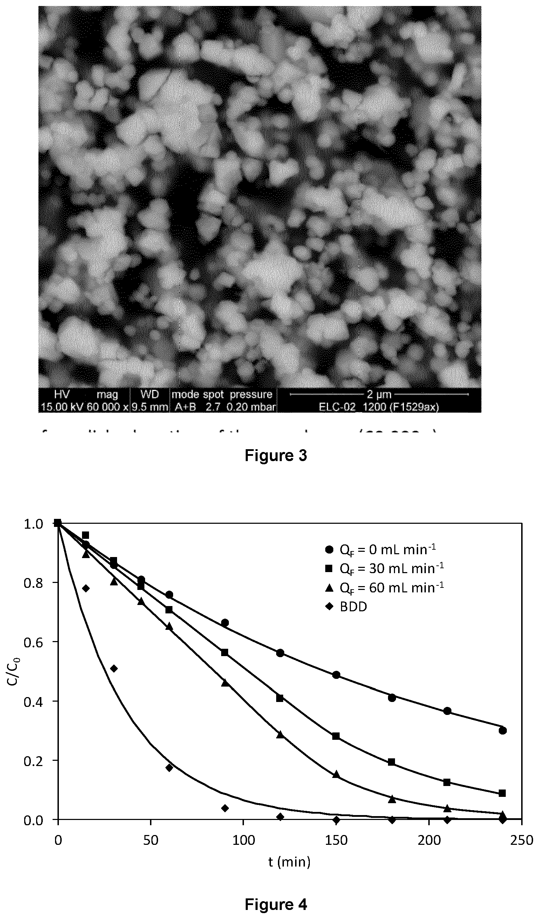

This microstructure was a consequence of the homogeneous and submicron particle size of the tin oxide used as raw material, as can be seen in the SEM image of Figure 3.

The specific surface was 2.23 m$^2$ g$^{-1}$, data that suggests a roughness-free surface of the grains and an absence of intragranular porosity, which is consistent with the SEM images.

The mean resistivity of the membranes was 0.024 $\Omega$ cm, which was higher than the values given for tin oxide doped with massively synthesized Sb (between $4.43 \times 1o$-3 $\Omega$ cm [11] and $2.2 \times 10^{-4}$ $\Omega$ cm [12] in samples synthesized by SPS from nanometric powder), but considering the effect of porosity on ceramic resistivity [13], it was low enough to allow its use in electrofiltration processes.

**Electrochemical oxidation of NOR**

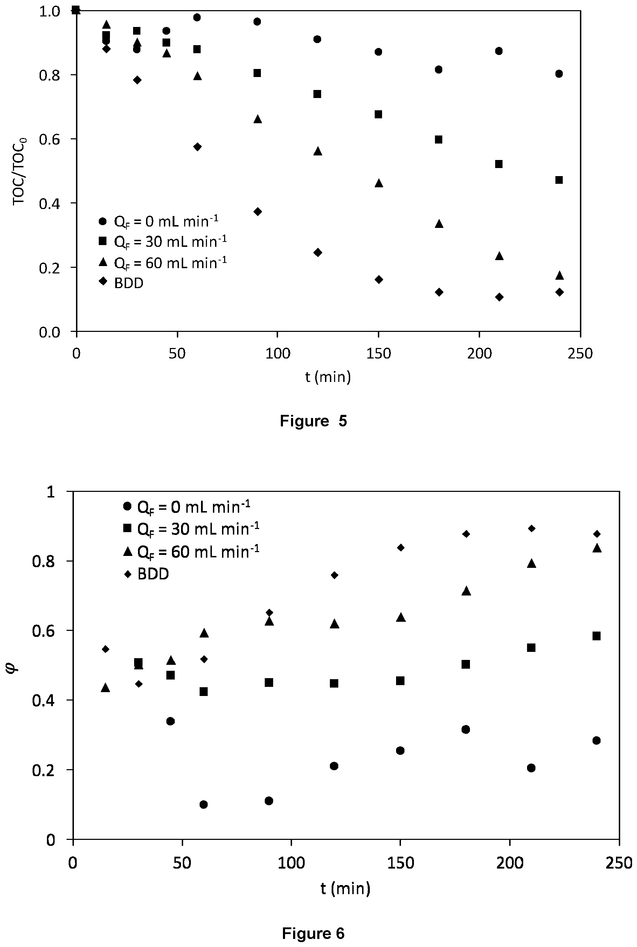

The results obtained during the EF experiments with the Sb)SnO$_2$ membranes at two different filtration flow rates and an applied current density of 35 mA cm$^{-2}$ were compared with those obtained in a conventional flow electrolysis reactor, using as anodes the conductive ceramic membrane operating as an electrode ($Q_F$ = 0 mL min$^{-1}$) and a BDD electrode. The evolution of the relative concentration of NOR and TOO for the different electrode materials and reactor configurations are shown in Figures 4 and 5, respectively. For the same value of applied current, the highest degradation and mineralization rates are achieved with the BDD electrode: 100% and 88%, respectively. Nevertheless, similar NOR degradation and mineralization values are obtained using the conductive ceramic membrane at the highest filtration rate of 60 mL min$^{-1}$. On the other hand, the permeation of the liquid through the conductive ceramic membrane allows to achieve a considerable improvement, both in the rates of degradation and NOR mineralization. At the end of the experiments, the degree of NOR removal with the conductive ceramic membrane increases from 70% in the absence of filtration to 91% and 98.3% for filtration flow rates of 30 and 60 mL min-1, respectively. Regarding the degree of mineralization, a similar trend is observed, since this parameter increases from 20% without filtration to 53% and 82% for filtration flow rates of 30 and 60 my min$^{-1}$, respectively. As can be seen, the degradation and mineralization degrees achieved with the maximum filtration rate are close to those obtained with the BDD electrode, which is caused by the efficient utilization of all active sites in the EF experiments. However, NOR oxidation still occurs faster with the BDD electrode. The faster degradation and mineralization of NOR achieved with the BDD electrode can be explained by the very weak electrode-'OH interaction, which results in a considerably higher $O_2$ surge compared to the ceramic electrode [14,15]. However, cost and scaling of the BDD electrode make EF with (Sb)SnO$_2$ membranes advantageous.

Comparing Figures 4 and 5, it is observed that, for a given time, the degraded NOR fraction is greater than the mineralized NOR fraction for the two electrodes and for all operating conditions. The difference between the two parameters can be quantified by the degree of electrochemical mineralization given by equation (1). Figure 6 shows the effect of filtration rate on the degree of electrochemical mineralization. The results are compared with those obtained in the absence of filtration ($Q_F$ = 0 mL min$^{-1}$) and those obtained with the BDD electrode. For all operating conditions $\Phi_{NOR}$ increases with time as the intermediates formed during NOR degradation are gradually converted to $CO_2$. In general, the best values at intermediate operating times are achieved with the BDD electrode. However, at the end of the experiments, the values obtained with the conductive ceramic membrane at the maximum filtration rate of 60 mL min$^{-1}$ are close to the final value of 0.88 obtained with the BDD electrode. Among the experiments performed with the conductive ceramic membrane, $\Phi_{NOR}$ improves with an increase in the filtration flow rate. At the end of the EF process, the $\Phi_{NOR}$ values vary from 0.28 for the ceramic membrane without filtration to 0.58 and 0.84 for filtration flow rates of 30 mL min-1 and 60 mL min-1, respectively.

**Claims**

1. A method for removing contaminants from a liquid effluent, comprising:

   - introducing the liquid effluent to be treated in an electrochemical reactor, comprising

      - a cathode facing
      - a conductive ceramic membrane comprising tin oxide doped with at least one metal oxide, which acts simultaneously as anode and as a filtration membrane, and which separates the reactor into two compartments, which are a reaction chamber and a filtration chamber, and

   - carrying out an electrofiltration in which at least part of the liquid effluent to be treated is passed from the reaction chamber to the filtration chamber through the conductive ceramic membrane.

2. Method according to the preceding claim, which comprises passing the liquid effluent to be treated into the reaction chamber by means of a liquid impulsion device.

3. Method according to claims 1 to 2, whrein the passage of the liquid effluent to be treated is carried out continuously or by recirculating the liquid to be treated through a storage tank.

4. Method according to any one of the preceding claims, wherein the tin oxide is doped with one or more metal oxides selected from among Sb, Mo, V, Al, Ta, Nb, Ge, Cr, Bi, Ga, Li, Ce, La, Cu and Y.

5. Method according to the preceding claim, in which the dopant metal is antimony oxide.

6. Method according to any one of the preceding claims, in which the membrane has a porosity of between 30% and 70% by volume, with respect to the total volume.

7. Method according to any one of the preceding claims, wherein the conductive ceramic membrane is a massive, three-dimensional element and has a microporous structure.

8. Method according to any one of the preceding claims 1 to 7, wherein the conductive ceramic membrane has a pore size distribution such that the largest pores have a maximum size of 50% greater than the size of the smallest ones.

9. Method according to any one of the preceding claims 1 to 8, wherein the conductive ceramic membrane has a mean pore diameter of less than 10 $\mu$m, preferably less than 1 $\mu$m.

10. Method according to any one of the preceding claims 1 to 9, wherein the conductive ceramic membrane has a specific surface area of between 1.5 and 3 $m^2\,g^{-1}$.

11. Method according to any one of the preceding claims 1 to 10, comprising passing at least part of the liquid effluent to be treated, from the reaction chamber, to a storage tank.

12. Method according to any one of the preceding claims 1 to 11, wherein at least a part of the liquid effluent to be treated is passed from the reaction chamber to the filtration chamber through the electrically conductive ceramic membrane by means of a pressure gradient.

13. Method according to any one of the preceding claims 1 to 12, wherein the part of the liquid effluent to be treated that has passed through the ceramic membrane, and has been transferred to the filtration chamber, is passed to a storage tank.

14. Method according to any one of the preceding claims 1 to 13, comprising recirculating liquid effluent to be treated from a storage tank to the reactor, without said fluid passing through the conductive ceramic membrane.

15. Method according to any one of the preceding claims, wherein the pollutants are organic compounds, more preferably emerging pollutants, and more preferably, they are refractory organic compounds or recalcitrant pollutants.

16. Installation for carrying out the process defined in one of claims 1 to 15, comprising a reactor in which there are arranged:

- a cathode facing
- a conductive ceramic membrane of tin oxide doped with at least one metal oxide, which acts as anode and as a filtration membrane, and which separates the reactor into two compartments, a reaction chamber and a filtration chamber, to carry out an electrofiltration in which the liquid effluent to be treated that includes the pllutants to be removed is passed through the conductive ceramic membrane.

**Amended claims under Art. 19.1 PCT**

1. A method for removing contaminants from a liquid effluent, comprising:

- introducing the liquid effluent to be treated in an electrochemical reactor, comprising

    - a cathode facing
    - a conductive ceramic membrane comprising tin oxide doped with at least one metal oxide, which acts simultaneously as anode and as a filtration membrane, and which separates the reactor into two compartments, which are a reaction chamber and a filtration chamber, and

- carrying out an electrofiltration in which at least part of the liquid effluent to be treated is passed from the reaction chamber to the filtration chamber through the conductive ceramic membrane.

2. Method according to the preceding claim, which comprises passing the liquid effluent to be treated into the reaction chamber by means of a liquid impulsion device.

3. Method according to claim 1 or 2, wherein the tin oxide is doped with one or more metal oxides selected from among Sb, Mo, V, Al, Ta, Nb, Ge, Cr, Bi, Ga, Li, Ce, La, Cu and Y.

4. Method according to the preceding claim, in which the dopant metal is antimony oxide.

5. Method according to any one of the preceding claims, in which the membrane has a porosity of between 30% and 70% by volume, with respect to the total volume.

6. Method according to any one of the preceding claims, wherein the conductive ceramic membrane is a massive, three-dimensional element and has a microporous structure.

7. Method according to any one of the preceding claims 1 to 6, wherein the conductive ceramic membrane has a pore size distribution such that the largest pores have a maximum size of 50% greater than the size of the smallest ones.

8. Method according to any one of the preceding claims 1 to 7, wherein the conductive ceramic membrane has a mean pore diameter of less than 10 $\mu$m, preferably less than 1 $\mu$m.

9. Method according to any one of the preceding claims 1 to 8, wherein the conductive ceramic membrane has a specific surface area of between 1.5 and 3 m$^2$ g$^{-1}$.

10. Method according to any one of the preceding claims 1 to 9, comprising passing at least part of the liquid effluent to be treated, from the reaction chamber, to a storage tank.

11. Method according to any one of the preceding claims 1 to 10, wherein at least a part of the liquid effluent to be treated is passed from the reaction chamber to the filtration chamber through the electrically conductive ceramic membrane by means of a pressure gradient.

12. Method according to any one of the preceding claims 1 to 11, wherein the part of the liquid effluent to be treated that has passed through the ceramic membrane, and has been transferred to the filtration chamber, is passed to a storage tank.

13. Method according to any one of the preceding claims 1 to 12, comprising recirculating liquid effluent to be treated from a storage tank to the reactor, without said fluid passing through the conductive ceramic membrane.

14. Method according to any one of the preceding claims, wherein the pollutants are organic compounds, more preferably emerging pollutants, and more preferably, they are refractory organic compounds or recalcitrant pollutants.

15. Installation for carrying out the process defined in one of claims 1 to 14, comprising a reactor in which there are arranged:

- a cathode facing
- a conductive ceramic membrane of tin oxide doped with at least one metal oxide, which acts as anode and as a filtration membrane, and which separates the reactor into two compartments, a reaction chamber and a filtration chamber, to carry out an electrofiltration in which the liquid effluent to be treated that includes the pollutants to be removed is passed through the conductive ceramic membrane.

**Figure 1**

**Figure 2**

Figure 3

Figure 4

Figure 5

Figure 6

Figure 7

## INTERNATIONAL SEARCH REPORT

| | International application No. |
|---|---|
| | PCT/ES2022/070701 |

**A. CLASSIFICATION OF SUBJECT MATTER**

*C02F1/46* (2006.01)

According to International Patent Classification (IPC) or to both national classification and IPC

**B. FIELDS SEARCHED**

Minimum documentation searched (classification system followed by classification symbols)
C02F

Documentation searched other than minimum documentation to the extent that such documents are included in the fields searched

Electronic data base consulted during the international search (name of data base and, where practicable, search terms used)

EPODOC, INVENES, ESPACENET, INTERNET, NPL, WPIAP, WPI

**C. DOCUMENTS CONSIDERED TO BE RELEVANT**

| Category* | Citation of document, with indication, where appropriate, of the relevant passages | Relevant to claim No. |
|---|---|---|
| A | CN 112010396 A ((TIBET SHENZHOU RUILIN ENVIRONMENTAL PROTECTION TECH CO LTD) 01/12/2020, Abstract and figures | 1-16 |
| A | XUEMING CHEN et al. Comparisión of Ti/BDD and Ti/SnO2-Sb2O5 electrodes for pollutant oxidation. Journal Of Applied Electrochemestry (2005) 2005, Pages 185-191 [on line][retrieved the 02/02/2022]. , <DOI: 10.1007s/10800-004-6068-0>. the whole document | 1-15 |
| A | SANCHEZ-RIVERA M.J. et al. Effect of pore generator on microestructure and resistivity of Sb2O3 and CuO doped SnO2 electrodes.. Journal Of Porous Materials, 08/08/2020 Pages 1801:1808 [on line] [retrieved on 02/02/2022]., <DOI: 101007/s10934-020-00959-0>. the whole document | 1-16 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 20/12/2022 | **(23/12/2022)** |

| Name and mailing address of the ISA/ | Authorized officer |
|---|---|
| | I. Abad Gurumeta |
| OFICINA ESPAÑOLA DE PATENTES Y MARCAS Paseo de la Castellana, 75 - 28071 Madrid (España) Facsimile No.: 91 349 53 04 | Telephone No. 91 3495337 |

Form PCT/ISA/210 (second sheet) (January 2015)

## INTERNATIONAL SEARCH REPORT

| International application No. |
|---|
| PCT/ES2022/070701 |

| C (continuation). | DOCUMENTS CONSIDERED TO BE RELEVANT | |
|---|---|---|
| Category * | Citation of documents, with indication, where appropriate, of the relevant passages | Relevant to claim No. |
| A | MORA-GÓMEZ J. et al. Evaluatrion of new ceramic electrodes based on Sb-doped SnO2 for the removal of emerging compounds present in water. Ceramics International, 28/10/2017 Pages 2216-2222. the whole document | 1-16 |

Form PCT/ISA/210 (continuation of second sheet) (January 2015)

**REFERENCES CITED IN THE DESCRIPTION**

**Non-patent literature cited in the description**

- **J. MORA-GOMEZ ; E. ORTEGA ; S. MESTRE ; V. PÉREZ-HERRANZ ; M. GARCÍA-GABALDÓN.** Electrochemical degradation of norfloxacin using BDD and new Sb-doped SnO2 ceramic anodes in an electrochemical reactor in the presence and absence of a cation-exchange membrane. *Sep. Purif. TechnoL,* 2019, vol. 208, 68-75
- **J. MORA-GÓMEZ ; M. GARCÍA-GABALDÓN ; E. ORTEGA ; M.-J. SÁNCHEZ-RIVERA ; S. MESTRE ; V. PÉREZ-HERRANZ.** Evaluation of new ceramic electrodes based on Sb-doped SnO2 for the removal of emerging compounds present in wastewater. *Ceram. Int.,* 2018, vol. 44, 2216-2222
- **J. CARRILLO-ABAD ; J. MORA-GÓMEZ ; M. GARCÍA-GABALDÓN ; E. ORTEGA ; S. MESTRE ; V. PÉREZ-HERRANZ.** Effect of the CuO addition on a Sb-doped SnO2 ceramic electrode applied to the removal of Norfloxacin in chloride media by electro-oxidation. *Chemosphere,* 2020, 249
- **J. CARRILLO-ABAD ; J. MORA-GÓMEZ ; M. GARCÍA-GABALDÓN ; S. MESTRE ; V. PÉREZ-HERRANZ.** Comparison between an electrochemical reactor with and without membrane for the nor oxidation using novel ceramic electrodes. *J. Environ. Manage.,* 2020, 268
- **T. DROGUETT ; J. MORA-GÓMEZ ; M. GARCÍA-GABALDÓN ; E. ORTEGA ; S. MESTRE ; G. CIFUENTES ; V. PÉREZ-HERRANZ.** Electrochemical Degradation of Reactive Black 5 using two-different reactor configuration. *Sci. Rep,* 2020, vol. 10, 1-11
- **J. MORA-GÓMEZ ; M. GARCÍA-GABALDÓN ; J. CARRILLO-ABAD ; M.T. MONTAÑÉS ; S. MESTRE ; V. PÉREZ-HERRANZ.** Influence of the reactor configuration and the supporting electrolyte concentration on the electrochemical oxidation of Atenolol using BDD and SnO2ceramic electrodes. *Sep. Purif. TechnoL,* 2020, 241
- **B. YANG ; P. GENG ; G. CHEN.** One-dimensional structured IrO2 nanorods modified membrane for electrochemical anti-fouling in filtration of oily wastewater. *Sep. Purif. Technol,* 2015, vol. 156, 931-941

- **A. XU ; X. DAI ; K. WEI ; W. HAN ; J. LI ; X. SUN ; J. SHEN ; L. WANG.** Preparation and characterization of a TiO2-NT/SnO2-Sb tubular porous electrode with long service lifetime for wastewater treatment process. *RSC Adv.,* 2017, vol. 7, 37806-37814
- **X. LI ; G. LIU ; M. SHI ; J. LI ; J. LI ; C. GUO ; J.K. LEE ; J. ZHENG.** Using TiO2 Mesoflower Interlayer in Tubular Porous Titanium Membranes for Enhanced Electrocatalytic Filtration. *Electrochim. Act.,* 2016, vol. 218, 318-324
- **J. MORA-GOMEZ ; E. ORTEGA ; S. MESTRE ; V. PÉREZ-HERRANZ ; M. GARCÍA-GABALDÓN.** *Separation and Purification Technology Electrochemical degradation of norfloxacin using BDD and new Sb-doped SnO2 ceramic anodes in an electrochemical reactor in the presence and absence of a cation-exchange membrane,* 2019, vol. 208, 68-75
- **J. WU ; F. CHEN ; Q. SHEN ; J.M. SCHOENUNG ; L. ZHANG.** Spark plasma sintering and densification mechanisms of antimony-doped tin oxide nanoceramics. *J. Nanomater.,* 2013, vol. 2013
- **J. ZHANG ; L. GAO ; M. CHEN.** Spark plasma sintering of high-density antimony-doped tin oxide ceramics from nanoparticles. *J. Am. Ceram. Soc.,* 2006, vol. 89, 3874-3876
- **M.-J. SÁNCHEZ-RIVERA ; A. GOZALBO ; V. PÉREZ-HERRANZ ; S. MESTRE.** Effect of pore generator on microstructure and resistivity of SbzOa and CuO doped SnO2electrodes. *J. Porous Mater.,* 2020, 27
- **X. CHEN ; F. GAO ; G. CHEN.** Comparison of Ti/BDD and Ti/SnO2-SbzOs electrodes for pollutant oxidation. *J. Appl. Electrochem.,* 2005, vol. 35, 185-191
- **J. MORA-GÓMEZ ; M. GARCÍA-GABALDÓN ; E. ORTEGA ; M.-J. SÁNCHEZ-RIVERA ; S. MESTRE ; V. PÉREZ-HERRANZ.** Evaluation of new ceramic electrodes based on Sb-doped SnO2 for the removal of emerging compounds present in wastewater. *Ceram. Int,* 2018, vol. 44, 2216-2222